# EUROPÄISCHE PATENTSCHRIFT

(11) **EP 3 210 832 B1**
(45) Veröffentlichungstag und Bekanntmachung des Hinweises auf die Patenterteilung: **05.12.2018**
(21) Anmeldenummer: 17150228.9
(22) Anmeldetag: 04.01.2017
(51) Int. Cl.: B60R 9/10, B62K 19/36

(54) **STEUERUNG EINES VERSTELLBAREN ZWEIRADSATTELS**
CONTROL OF AN ADJUSTABLE BICYCLE SADDLE
COMMANDE D'UN DEUX ROUES RÉGLABLE

(30) Priorität: 26.02.2016 DE 102016203034
(43) Veröffentlichungstag der Anmeldung: 30.08.2017
(73) Patentinhaber: Robert Bosch GmbH, 70442 Stuttgart (DE)
(72) Erfinder: Mattes, Thomas, 78598 Koenigsheim (DE); Wienss, Andreas, 72800 Eningen Unter Achalm (DE)

(56) Entgegenhaltungen:
- EP-A1- 2 540 606
- WO-A1-2014/111186
- DE-U1-202011 103 073

## Beschreibung

### Stand der Technik

Um eine optimale Haltung während der Fahrt zu erreichen, wird der Sattel eines Fahrrads üblicherweise so eingestellt, dass der Fahrer im Stand mit seinen Füßen gerade noch gut den Boden berühren kann. Bei einer geeigneten Wahl des Rahmens wird so erreicht, dass der Fahrer während des Tretens eine effektive Kraftübertragung erreicht.
Es kann jedoch während des Betriebs des Fahrrads die Situation auftreten, dass der Fahrer eine erhöhte oder eine erniedrigte Sitzposition einnehmen möchte. So kann beispielsweise bei einer schnellen Fahrt der Fahrer sich bewusst nach vorne beugen, um den Windwiderstand zu verringern. In diesem Fall wird durch eine erhöhte Sitzposition das Vorbeugen des Fahrers unterstützt. Dagegen kann zur Erleichterung des Aufsteigens des Fahrers bewusst eine tiefere Stellung des Sattels gewünscht sein. Derartige situationsbedingte Verstellungen des Fahrradsattels sind beispielsweise aus der Schrift DE 20 2011 103 073 U1, welche die Präambel der unabhängigen Ansprüche 1 (Verfahren) und 8 (Zweirad mit dem Verfahren) zeigt, oder der nicht vorveröffentlichten Schrift DE 10 2015 204 880 A1 bekannt. Für den Transport eines Fahrrads sind für Pkws Fahrrad-Gepäckträger mit speziellen Aufschiebehilfen bekannt, z.B. mit (ausfahrbarer) Rampe. Die Benutzung dieser Rampe bereitet jedoch gerade älteren Fahrern Schwierigkeiten, insbesondere wenn das Fahrrad ein schweres Elektrofahrrad darstellt. Hierbei kann zwar die bei einigen Elektrofahrrädern implementierte Schiebehilfe hilfreich sein, jedoch erfordert dies ebenfalls ein gewisses Geschick bei der Fahrt auf der Rampe.

Darüber hinaus sind Fahrrad-Montageständer für Reparaturen bekannt, die das Anheben des Fahrrads durch mechanische Hebevorrichtungen erleichtern.

Mit der vorliegenden Erfindung soll der Einsatz eines verstellbaren Fahrradsattels gezeigt werden, mit dem das Fahrrad im Stillstand in eine Park- bzw. Montageposition gebracht werden kann.

### Offenbarung der Erfindung

Die Erfindung beansprucht ein Verfahren sowie ein Steuergerät mit diesem Verfahren bzw. ein mit diesem Steuergerät ausgestattetes Zweirad zur Steuerung der Höhe des Sattels des Zweirads. Hierzu ist vorgesehen, dass das Zweirad, insbesondere ein Fahrrad bzw. ein zumindest teilweise elektrisch angetriebenes Fahrrad, einen Sattel aufweist, der mittels einer entsprechenden Verstellvorrichtung in seiner Höhe verstellt werden kann. Mit einer derartigen Verstellvorrichtung, z.B. einer elektrisch oder hydraulisch betriebenen Sattelstütze, kann der Sattel in Bezug auf den Rahmen des Zweirads bzw. den Boden verändert werden. Hierzu kann die Verstellvorrichtung in oder an dem Sattelrohr befestigt sein. Die Bewegung des Sattels kann dabei in die Richtung der Sattelrohrs oder auch parallel zum Boden erfolgen. Weiterhin ist vorgesehen, dass das Verfahren bzw. das Steuergerät mittels erfasster Parameter erkennt, ob eine Park-, Transport- und/oder Wartungssituation des Zweirads vorliegt, so dass die nachfolgende erfindungsgemäße Steuerung nicht während des Fahrbetriebs des Zweirads durchgeführt wird.

Zur Durchführung der Steuerung wird in Abhängigkeit von der erkannten Park-, Transport- und/oder Wartungssituation erfasst, ob ein erstes Startsignal vorliegt. Dieses Startsignal wird beispielsweise vom Benutzer des Zweirads abgegeben bzw. erzeugt. Bei Vorlage dieses ersten Startsignals wird die Verstellvorrichtung derart angesteuert, dass der Sattel zunächst eine höhere Position bzgl. des Rahmens und/oder des Bodens einnimmt. Hierbei kann es sich um die höchste mit der Verstellvorrichtung vorgesehenen Höhe handeln, die üblicherweise durch die mechanischen Eigenschaften der Verstellvorrichtung als auch der Sattelstütze bzw. des Sattelrohrs bestimmt werden. Alternativ kann auch eine andere Höhe vorgesehen sein, in die der Sattel durch die Verstellvorrichtung verfahren wird. Anschließend wird die Erzeugung eines zweiten Startsignals erfasst, bevor die Verstellvorrichtung erneut angesteuert wird. Dieses zweite Startsignal bewirkt, dass die zuvor eingestellt Höhe des Sattels wieder reduziert wird.

Der Vorteil dieser Erfindung besteht dabei darin, dass in einer Park- bzw. Wartungssituation der Sattel eines Zweirads für eine Hebe- oder Arretierungsfunktion verwendet werden kann. Dies könnte beispielsweise im Rahmen des Transports eines Fahrrads auf einem Pkw-Gepäckträger oder auf einen Montageträger zu Wartungs- und/oder Reparaturzwecke der Fall sein.

Durch das Hochfahren des Sattels bzw. die Erhöhung des Sattels mit nachfolgender ortfester Befestigung des Sattels kann das Herunterfahren bzw. die Verringerung des Höhe des Sattels einen Hebeeffekt des Zweirads realisieren. Hierzu ist notwendig, dass die Verstellvorrichtung derart ausgestaltet ist, dass es die Gewichtskraft zumindest des Fahrrads, ggf. mit Gepäckbeladung bewegen kann.

In einer besonderen Ausgestaltung ist vorgesehen, dass die Höhe des Sattels nach dem Herunterfahren bzw. dem Verringern der Höhe kleiner ist als die Höhe vor dem Hochfahren bzw. der Vergrößerung. Diese Ausgestaltung ermöglicht es, das Zweirad bei einer Fixierung des Sattels höher anzuheben. Optional kann die Sattelhöhe durch ein drittes Startsignal in seine ursprüngliche, für den Fahrer des Zweirads ausgelegte (Betriebs-) Höhe, verfahren werden. Es ist jedoch auch möglich, dass schon das zweite Startsignal den Sattel in seine vorherige Höhe zurück stellt.

Eine Weiterbildung der Erfindung besteht darin, die Verschiebung des Sattels dazu zu nutzen, das Zweirad zu arretieren. Hierzu wird der Sattel gegen einen Anschlag gedrückt, so dass sich das Zweirad nicht mehr bewegen kann. Diese Weiterbildung kann somit auch als Diebstahlschutz verwendet werden, falls das Zweirad nicht ohne eine erneute Verstellung/Erniedrigung des Sattels bewegt werden kann. Bei dieser Ausgestaltung kann zusätzlich die Kraft erfasst werden, die durch mechanischen Widerstands des Anschlag zusätzlich erzeugt werden muss. Dabei kann die Steuerung der Bewegung der Verstellvorrichtung bzw. die Höhenverstellung in Abhängigkeit dieser erfassten Kraft erfolgen. Optional kann vorgesehen sein, dass beim Erreichen eines Schwellenwerts der Kraft die Ansteuerung bzw. die Höhenverstellung beendet wird.

Zur Erkennung der Bedingungen, in denen das obige erfindungsgemäße Verfahren angewandt werden kann, können Betriebs- sowie Umgebungs- bzw. Umfeldparameter des Zweirads erfasst werden. Hierzu zählen beispielsweise die Geschwindigkeit des Zweirads, der Betrieb eines Antriebmotors und die Betätigung der Pedalen eines Fahrrads. Weiterhin kann auch die Erkennung eines speziellen Orts dazu führen, z.B. einer Werkstatt, dass die beschriebene Hebefunktion aktiviert werden kann. Darüber hinaus kann der Fahrer auch bewusst die entsprechende Park-, Transport- und/oder Montagesituation durch eine entsprechende manuelle Eingabe aktivieren.

Die Erzeugung des ersten, zweiten oder auch dritten Startsignals kann über eine Betätigungseinrichtung am Zweirad, z.B. direkt am Sattel oder Lenker, oder auch mittels Fern- bzw. Funksteuerung erfolgen. So ist es möglich, die Startsignale über ein Handy bzw. eine App zu erzeugen.

Weitere Vorteile ergeben sich aus der nachfolgenden Beschreibung von Ausführungsbeispielen bzw. aus den abhängigen Patentansprüchen.

### Kurze Beschreibung der Zeichnungen

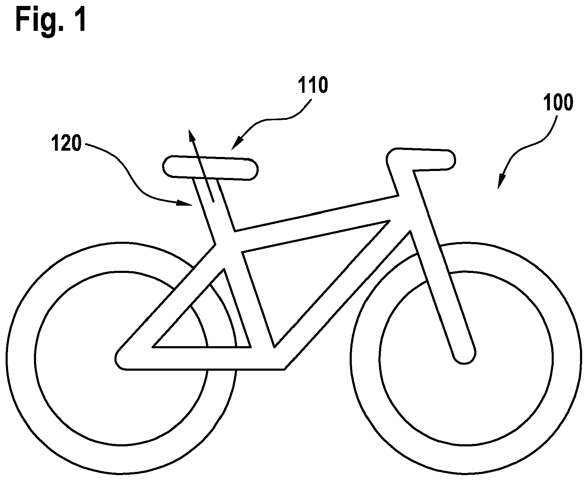

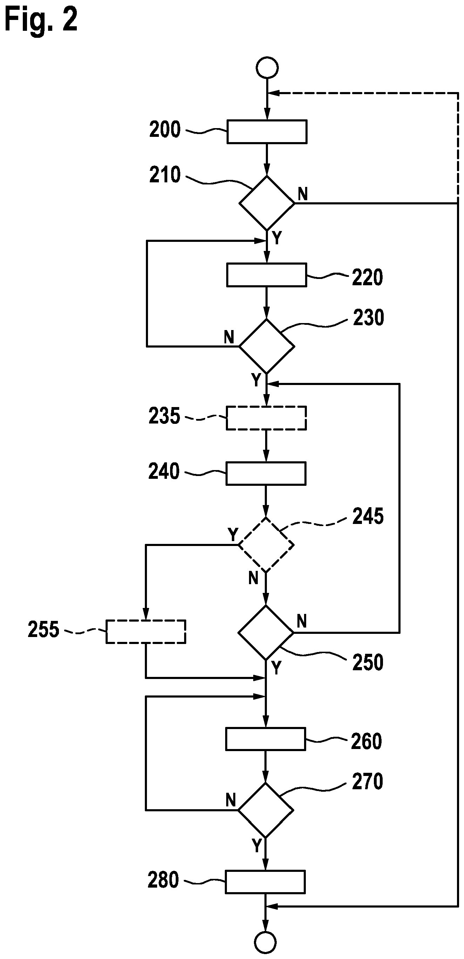

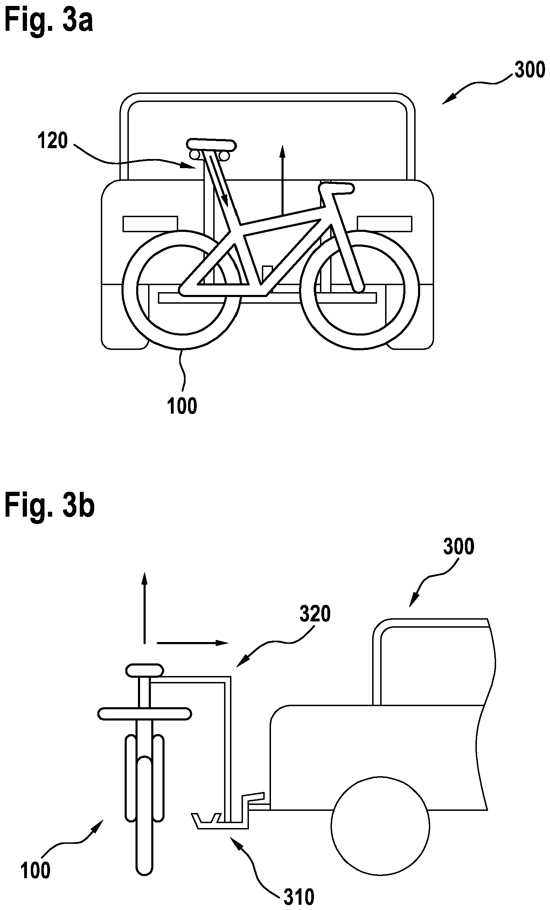

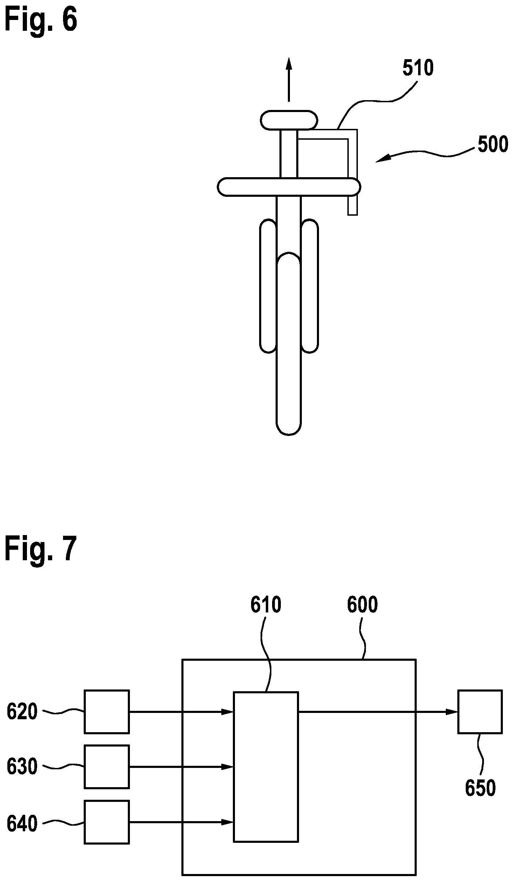

Figur 1 zeigt ein Fahrrad mit den für die Erfindung wesentlichen Komponenten. In der Figur 2 ist ein mögliches Flussdiagramm für das erfindungsgemäße Verfahren dargestellt. Die Figuren 3a bis 3d, 4a und 4b, 5a und 5b sowie 6 zeigen verschiedene Anwendungsbeispiele der Erfindung. Mit der Figur 7 wird schematisch eine Vorrichtung dargestellt, in der das erfindungsgemäße Verfahren abläuft.

### Ausführungsbeispiele

Im Folgenden wird die Erfindung anhand eines Fahrrads beschrieben, wobei ausdrücklich darauf hingewiesen werden soll, dass auch andere Zweiräder, die einen höhenverstellbaren Sattel aufweisen, mit der beanspruchten Erfindung betrieben werden können.

Ein für die Erfindung verwendbares Fahrrad 100 weist eine Verstellvorrichtung 120 auf, die den Sattel 110 in seiner Höhe verstellen kann (siehe Figur 1). Eine derartige Verstellvorrichtung 120 kann beispielsweise elektrisch und/oder hydraulisch an oder im Sattelrohr untergebracht sein. Mit einer derartigen Verstellvorrichtung 120 lässt sich der Sattel 110 z.B. entlang der Richtung des Sattelrohrs nach oben oder nach unten bewegen. Es ist jedoch auch möglich, eine Verstellvorrichtung 120 zu verwenden, die den Sattel 110 parallel zum Boden verschiebt.

Anhand des Flussdiagramms der Figur 2 wird eine mögliche Ausführung der Erfindung beschrieben. Nach dem Start des Verfahrens wird im Schritt 200 erfasst, ob eine Park-, Transport-, Wartungs- und/oder Montagesituation vorliegt. Dies kann z.B. direkt durch die Eingabe einer entsprechenden Information am Bedienelement eines Elektrofahrrads geschehen oder indirekt durch die Ableitung von Betriebs-, Umwelt- und/oder Umfeldparametern ermittelt werden. Im nachfolgenden Schritt 210 wird überprüft, ob eine derartige Park-, Transport-, Wartungs- und/oder Montagesituation vorliegt. Liegt keine dieser besonderen Situationen vor, beispielsweise weil sich das Fahrrad bewegt oder die Tretkurbeln betätigt werden, so wird das Verfahren beendet. Alternativ kann das Verfahren auch erneut mit dem Schritt 200 durchlaufen werden.

Bei der Erkennung einer der beschriebenen speziellen Situation wird das Verfahren zur Höhenverstellung weiterverfolgt. Die Überprüfung dieser speziellen Situation ist notwendig, da ansonsten eine ungewollte Sattelveränderung der beschriebenen Form während des Betriebs des Fahrrads zu einer Gefährdung der Fahrsicherheit führen kann.

Im nächsten Schritt 220 wird daraufhin ein erstes Startsignal 220 erfasst, deren Vorhandensein im folgenden Schritt 230 überprüft wird. Solange kein gültiges erstes Startsignal erfasst wird, wird die Erfassung des ersten Startsignals 220 wiederholt. Alternativ können die Schritte 220 und 230 auch zusammengefasst werden, indem das Verfahren erst bei Vorliegen des ersten Startsignals weiter verfolgt wird.

Durch die Initiierung mittels des ersten Startsignals wird im Schritt 240 die Verstellvorrichtung, z.B. ein Motor oder eine Hydraulik, derart angesteuert, dass der Sattel nach oben, d.h. in die Höhe verschoben wird. Im nächsten Schritt 250 wird überprüft, ob der Sattel die maximale bzw. eine erste vorbestimmte Höhe erreicht hat. Ist das nicht der Fall, wird die Verstellvorrichtung mittels des Schritts 240 erneut bzw. weiterhin angesteuert. Ist jedoch die maximale bzw. erste vorbestimmte Höhe des Sattels erreicht, so wird im Schritt 260 erfasst, ob ein zweites Startsignal vorliegt. Die Überprüfung dieses zweiten Startsignals erfolgt daraufhin im Schritt 270, wobei die Erfassung des Schritts 260 solange wiederholt wird, bis ein zweites Startsignal vorliegt. Dieses zweite Startsignal führt zum letzten Schritt 280, in dem der Verstellmechanismus derart angesteuert wird, dass der Sattel wieder eingefahren wird und somit dessen Höhe verringert wird.

Alternativ kann die Erfassung und Überprüfung des zweiten Startsignals der Schritte 260 und 270 auch in einem separaten Verfahren ablaufen, welches erst nach Ende des vorherigen Verfahrens mit dem positiven Durchlaufen des Schritts 250 gestartet wird. Optional können die Schritt 260 und 270 analog zu Schritt 220 und 230 auch zusammengefasst werden.

In einer Ausgestaltung der Erfindung kann vorgesehen sein, dass der Sattel im Schritt 280 nicht in die ursprüngliche Höhe zurückgefahren wird. So ist denkbar, dass der Sattel bis zur minimalen Höhe oder einer zweiten vorbestimmten niedrigen Höhe zurückgefahren wird. Diese minimale bzw. zweite vorbestimmte niedrige Höhe kann dazu genutzt werden, den Hebeeffekt zu steigern. Bei dieser Ausgestaltung ist jedoch möglicherweise die Erfassung eines dritten Startsignals notwendig, mittels dem der Sattel wieder in seine ursprüngliche, für den Fahrer während der Fahrt optimierten Höhe zurückfährt.

In einer alternativen Ausgestaltung wird in einem Schritt 235 nach dem Schritt 230 eine Kraft erfasst, gegen die die Verstellvorrichtung den Sattel verschieben muss. Im nachfolgenden Schritt 240 kann optional bei Kenntnis dieser Kraft die Steuerung der Verstellvorrichtung von dieser Kraft abhängig gestaltet werden. So ist beispielsweise denkbar, dass bei einer Änderung/Erhöhung der Kraft die Verstellgeschwindigkeit des Sattels reduziert wird. Es kann jedoch auch vorgesehen sein, dass in einem gesonderten Schritt 245 überprüft wird, ob die erfasste Kraft einen vorbestimmten Schwellenwert überschreitet. Ein derartiger Anstieg der Kraft mit Überschreitung des Schwellenwerts kann beispielsweise anzeigen, dass der Sattel an einem Anschlag anliegt und nicht mehr weiter verschoben werden kann. In diesem Fall wird die Ansteuerung der Verstellvorrichtung und somit die Verschiebung im Schritt 255 beendet. Solange der Sattel noch nicht in die maximal höchste Position verfahren ist oder die erste vorbestimmte Höhe erreicht hat, wird die Ansteuerung unter Erfassung der Kraft gemäß der Schritte 235, 240 und 245 wiederholt.

Mit der Figur 7 wird schematisch eine Vorrichtung beschrieben, z.B. ein Steuergerät zur Anwendung an einem Zweirad, die das vorstehend ausgeführte Verfahren durchführen kann. In einem Steuergerät 600 ist eine Recheneinheit 610 vorgesehen, welche aus der Erfassung von Parametern wenigstens eines Sensors 620 die Park-, Transport-, Wartungs- und/oder Montagesituation erkennt. Alternativ kann die spezielle Situation, in der das vorstehend beschriebene erfindungsgemäße Verfahren durchgeführt werden soll, auch mittels eines entsprechenden Signals, z.B. durch den Fahrer des Fahrrads, initiiert werden. Weiterhin erfasst die Recheneinheit 610 die Startsignale, die die unterschiedlichen Ansteuerungen der Verstellvorrichtung 650 startet. Optional ist ein Sensor 640 vorgesehen, der die Kraft erfasst, der der Bewegung des Sattels durch die Verstellvorrichtung 650 entgegen gebracht wird. Dies kann auch ein Stromsensor sein, der den Ansteuerstrom der Verstellvorrichtung 650 erfasst. Die Recheneinheit 610 steuert entsprechend des erfindungsgemäßen Verfahrens die Verstellvorrichtung 650 gemäß der vorstehenden Schritte an. Das zugehörige Steuergerät 600 kann dabei Teil der Steuerung eines Elektrofahrrads sein, als separates Steuergerät für die Verstellvorrichtung (auch für normale Fahrräder, z.B. batteriegetrieben) oder auch gänzlich separat vom Fahrrad vorgesehen sein.

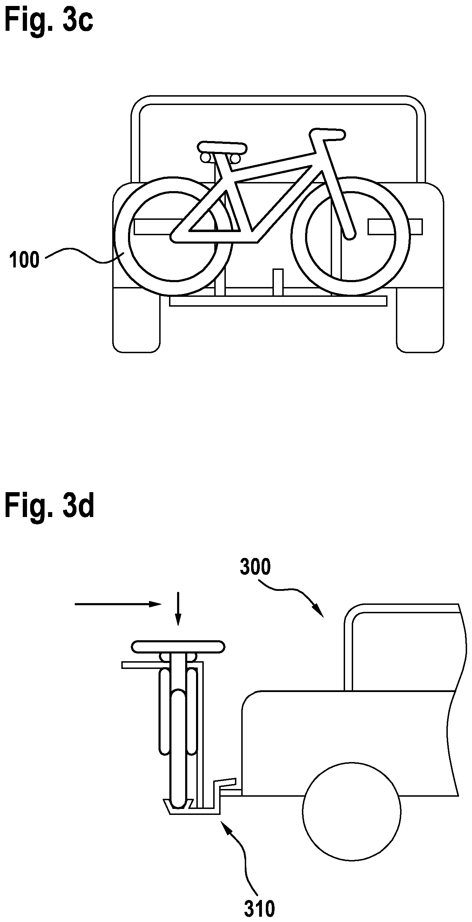

In den Figuren 3a bis 3d ist ein erstes Anwendungsbeispiel der Erfindung aufgezeigt. Zum Transport eines Fahrrads 100 auf einem an einem Pkw 300 befestigten Fahrradträger 310 wird zunächst mit einem ersten Startsignal der Sattel nach oben verschoben. Durch diese erhöhte Position des Sattels wird es dem Nutzer ermöglicht, das Fahrrad über die herausstehende Stange 320 des Fahrradträgers 310 zu schieben, ohne es anheben zu müssen (siehe Ansichten des Hecks sowie Seitenansicht in den Figuren 3a und 3b). Anschließend wird durch das zweite Startsignal ein Anheben des Fahrrads 100 erreicht, indem die Verstellvorrichtung 120 das Fahrrad 100 nach oben auf den Fahrradträger 310 zieht. Dies wird durch das ortsfeste Aufliegen des Sattel auf der Stange 320 erreicht. Das Fahrrad kann somit auf dem Fahrradträger für die Fahrt befestigt werden. Optional kann durch eine erneute Betätigung der Verstellvorrichtung 120 der Sattel wieder in die Höhe nach unten verfahren werden, so dass das Fahrrad 100 auf dem Fahrradträger aufsitzt (siehe Figuren 3c und 3d).

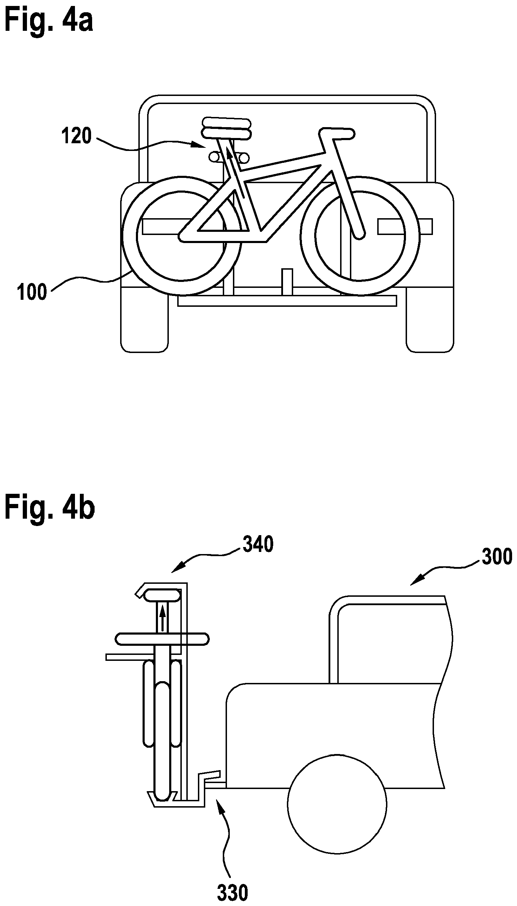

Die beschriebene Verstellung der Höhe des Sattels kann bei einem Pkw-Gepäckträger auch zur Sicherung gegen Diebstahl verwendet werden. Wie in den Figuren 4a und 4b abgebildet ist, weist der Gepäckträger 310 einen oberen Anschlag 340 auf, gegen den das Fahrrad 100 bzw. der Sattel 110 gedrückt wird. Durch die Arretierung des Fahrrads 100 zwischen diesem Anschlag 340 und der unteren Aufnahme 330 des Trägers 310 kann das Fahrrad 100 nicht entfernt werden. Erst nach Initiierung der Reduzierung der Sattelhöhe durch das zweite Startsignal kann das Fahrrad vom Träger 310 entnommen werden.

Das erfindungsgemäße Verfahren kann auch für Fahrräder verwendet werden, die keinen Ständer besitzen, oder deren Ständer nicht für das Gewicht des Fahrrads ggf. inklusive Gepäck ausgelegt sind. So ist gerade bei Rennradfahrern oder Mountainbikes üblich, ihr Fahrrad mit dem Sattel an eine Stange zu hängen. Mit der vorliegenden Erfindung kann dieses (kurzzeitige) Parken ebenfalls realisiert werden.

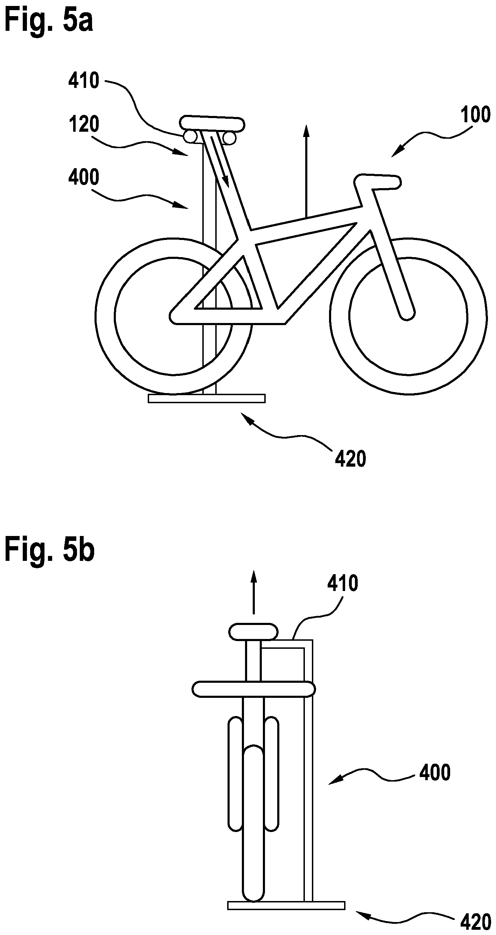

Eine weitere Anwendung der Erfindung bietet sich bei Reparatur oder Montagearbeiten am Fahrrad gemäß der Figuren 5a und 5b an. So kann das Fahrrad 100 an eine Stange 410 eines Montageständers 400 angehängt werden, ohne dass der Monteur das Gewicht des Fahrrads 100 anheben muss. Wichtig bei dieser Form des Montageständers 400 ist jedoch ein ausreichend großer Standfuss 420, so dass ein Umkippen des gesamten Montageständers 400 während des Hebevorgangs verhindert wird. Für diesen beschriebenen Zweck bietet es sich auch an, dass die Höhe, in der der Sattel 110 durch das zweite Startsignal verbracht wird, geringer als die ursprüngliche Höhe ist. Dadurch wird das Fahrrad 110 höher angehoben, so dass der Monteur einfacher an das Fahrrad 100 heran kommt. In diesem Fall kann es sinnvoll sein, ein drittes Startsignal zu erfassen, mittels dem der Sattel in seine ursprüngliche Position bzw. Höhe verbracht werden kann.

Entsprechend dem vorherigen Anwendungsbeispiel kann auch eine an der Wand befestigte Halterung genutzt werden (siehe Figur 6).

Das in der Erfindung beschriebene erste, zweite und dritte Startsignal kann sowohl durch eine einzelne Vorrichtung, z.B. ein Button auf einem Bedienelement des Fahrrads oder einem Smartphone, oder durch separate Einrichtungen erzeugt werden. Weiterhin ist denkbar, dass die Startsignale per Funkübertragung empfangen werden.

## Patentansprüche

1. Verfahren zur Steuerung der Höhe des Sattels eines Zweirads, insbesondere eines Fahrrads (100), wobei das Zweirad einen mittels eines Verstellvorrichtung (120, 650) in der Höhe verstellbaren Sattel (110) aufweist, wobei die Höhenverstellung in Abhängig von der Betriebssituation des Zweirads durchgeführt wird, **dadurch gekennzeichnet, dass**
• ein erstes Startsignal in Abhängigkeit einer erkannten Park-, Transport- und/oder Wartungssituation erfasst wird (220), und
• in Abhängigkeit des ersten Startsignals die Verstellvorrichtung (120, 650) derart angesteuert wird, dass die Höhe des Sattels (110) in Bezug auf den Rahmen des Zweirads vergrößert wird (240), und
• ein zweites Startsignal in Abhängigkeit von dem ersten Startsignal erfasst wird (260), und
• in Abhängigkeit des zweiten Startsignal die Verstellvorrichtung (120, 650) derart angesteuert wird, dass die Höhe des Sattels (110) in Bezug auf den Rahmen des Zweirads verringert wird (280).

2. Verfahren nach Anspruch 1, **dadurch gekennzeichnet, dass** die Verstellvorrichtung (120, 650) derart angesteuert wird, dass durch die Verringerung der Höhe des Sattels (110) das Zweirad angehoben wird, insbesondere vom Boden.

3. Verfahren nach Anspruch 1 oder 2, **dadurch gekennzeichnet, dass** die Verstellvorrichtung (120, 650) derart angesteuert wird, dass die Höhe des Sattels (110) nach der Verringerung kleiner ist als die Höhe des Sattels vor der Vergrößerung.

4. Verfahren nach einem der Ansprüche 1 bis 3, **dadurch gekennzeichnet, dass** die Park- und/oder Wartungsposition nach Vergrößerung der Höhe des Sattels (110) erreicht wird, indem wenigstens ein Teil des Sattels (110) gegen einen mechanischen Widerstand gedrückt wird.

5. Verfahren nach Anspruch 4, **dadurch gekennzeichnet, dass** eine Kraft erfasst wird (235), mit der der Sattel (110) gegen den mechanischen Widerstand gedrückt wird, wobei die Vergrößerung der Höhe des Sattels (110) in Abhängigkeit der erfassten Kraft gesteuert wird, wobei insbesondere vorgesehen ist, dass die Vergrößerung bei Erreichen eines Kraftschwellenwerts beendet wird (255).

6. Verfahren nach einem der Ansprüche 1 bis 5, **dadurch gekennzeichnet, dass** die Höhe des Sattels (110) nach der Verringerung und die Höhe des Sattels (110) vor der Vergrößerung übereinstimmen.

7. Verfahren nach einem der Ansprüche 1 bis 6, **dadurch gekennzeichnet, dass** die Park-, Transport- und/oder Wartungssituation in Abhängigkeit der Betriebsparameter und/oder Umgebungsparameter des Zweirads erkannt wird.

8. Zweirad, insbesondere ein Fahrrad, mit
• einem verstellbaren Sattel (110), wobei eine Verstellvorrichtung (120, 650) vorgesehen ist, der im oder am Sattelrohr des Zweiradrahmens angebracht ist, und dazu geeignet ist, die Sattelhöhe zu verstellen, und
• einem Steuergerät (600), welches die Verstellvorrichtung (120, 650) steuert, insbesondere mit einem der Verfahren nach Anspruch 1 bis 7,
**dadurch gekennzeichnet, dass** das Steuergerät (600) die Verstellvorrichtung (120, 650) derart ansteuert, dass
• in Abhängigkeit einer erkannten Park-, Transport- und/oder Wartungssituation und eines erfassten ersten Startsignals der Sattel (110) in seiner Höhe in Bezug auf den Rahme des Zweirads vergrößert wird, und
• in Abhängigkeit eines nach dem ersten Startsignal erfassten zweiten Startsignals der Sattel (110) in Bezug auf den Rahmen des Zweirads verringert wird.

9. Zweirad nach Anspruch 8, **dadurch gekennzeichnet, dass** die Verstellvorrichtung (120, 650) derart ausgeführt ist, dass er bei ortsfeststehendem Sattel (110) des Zweirads anheben kann, insbesondere vom Boden.

10. Zweirad nach einem der Ansprüche 8 oder 9, **dadurch gekennzeichnet, dass** die Park- und/oder Wartungssituation nach Vergrößerung der Höhe des Sattels (110) erreicht wird, indem wenigstens ein Teil des Sattels (110) gegen einen mechanischen Widerstand gedrückt wird.

11. Zweirad nach Anspruch 10, **dadurch gekennzeichnet, dass** das Steuergerät (600) eine Kraft erfasst (235), mit der der Sattel (110) gegen den mechanischen Widerstand gedrückt wird, wobei die Verstellvorrichtung (120, 650) in Abhängigkeit von der erfassten Kraft angesteuert wird, wobei insbesondere vorgesehen ist, dass die Ansteuerung der Verstellvorrichtung (120, 650) bei Erreichen eines Kraftschwellenwerts beendet wird.

12. Zweirad nach einem der Ansprüche 8 bis 11, **dadurch gekennzeichnet, dass** das Steuergerät (600) die Verstellvorrichtung (120, 650) derart ansteuert, dass die Höhe des Sattels (110) nach der Verringerung kleiner ist als die Höhe des Sattels (110) vor der Vergrößerung.

13. Zweirad nach einem der Ansprüche 8 bis 12, **dadurch gekennzeichnet, dass** das Steuergerät (600) die Park-, Transport- und/oder Wartungssituation in Abhängigkeit der Betriebsparameter und/oder Umgebungsparameter des Zweirads erkennt.

14. Zweirad nach einem der Ansprüche 8 bis 13, **dadurch gekennzeichnet, dass** das Steuergerät (600) das erste und/oder das zweite Startsignal mittels einer Funkschnittstelle erfasst.

## Claims

1. Method for controlling the height of the saddle of a two-wheeled vehicle, in particular a bicycle (100), wherein the two-wheeled vehicle has a saddle (110) which is adjustable in height by means of an adjustment device (120, 650), wherein the height adjustment is carried out depending on the operating situation of the two-wheeled vehicle, **characterized in that**
• a first starting signal is detected depending on an identified parking, transport and/or maintenance situation (220), and
• depending on the first starting signal, the adjustment device (120, 650) is activated in such a manner that the height of the saddle (110) is increased (240) with respect to the frame of the two-wheeled vehicle, and
• a second starting signal is detected (260) depending on the first starting signal, and
• depending on the second starting signal, the adjustment device (120, 650) is activated in such a manner that the height of the saddle (110) is reduced (280) with respect to the frame of the two-wheeled vehicle.

2. Method according to Claim 1, **characterized in that** the adjustment device (120, 650) is activated in such a manner that the two-wheeled vehicle is raised, in particular from the ground, by the reduction in the height of the saddle (110).

3. Method according to Claim 1 or 2, **characterized in that** the adjustment device (120, 650) is activated in such a manner that the height of the saddle (110) after the reduction is lower than the height of the saddle before the increase.

4. Method according to one of Claims 1 to 3, **characterized in that** the parking and/or maintenance position is reached after height of the saddle (110) is increased, by at least part of the saddle (110) being pressed counter to a mechanical resistance.

5. Method according to Claim 4, **characterized in that** a force is detected (235) with which the saddle (110) is pressed against the mechanical resistance, wherein the increase in the height of the saddle (110) is controlled depending on the detected force, wherein it is provided in particular that the increase is ended (255) when a force threshold value is reached.

6. Method according to one of Claims 1 to 5, **characterized in that** the height of the saddle (110) after the reduction and the height of the saddle (110) before the increase coincide.

7. Method according to one of Claims 1 to 6, **characterized in that** the parking, transport and/or maintenance situation is identified depending on the operating parameters and/or ambient parameters of the two-wheeled vehicle.

8. Two-wheeled vehicle, in particular a bicycle, with
• an adjustable saddle (110), wherein an adjustment device (120, 650) is provided which is attached in or to the saddle tube of the two-wheeled-vehicle frame and is suitable for adjusting the saddle height, and
• a control unit (600) which controls the adjustment device (120, 650), in particular using one of the methods according to Claim 1 to 7,
**characterized in that** the control unit (600) activates the adjustment device (120, 650) in such a manner that
• depending on an identified parking, transport and/or maintenance situation and a detected first starting signal, the saddle (110) is increased in its height with respect to the frame of the two-wheeled vehicle, and
• depending on a second starting signal detected after the first starting signal, the saddle (110) is reduced with respect to the frame of the two-wheeled vehicle.

9. Two-wheeled vehicle according to Claim 8, **characterized in that** the adjustment device (120, 650) is designed in such a manner that, when the saddle (110) of the two-wheeled vehicle is in a fixed position, it can raise, in particular from the ground.

10. Two-wheeled vehicle according to either of Claims 8 and 9, **characterized in that** the parking and/or maintenance situation is reached after the height of the saddle (110) is increased, by at least part of the saddle (110) being pressed against a mechanical resistance.

11. Two-wheeled vehicle according to Claim 10, **characterized in that** the control unit (600) detects (235) a force with which the saddle (110) is pressed against the mechanical resistance, wherein the adjustment device (120, 650) is activated depending on the detected force, wherein it is provided in particular that the activation of the adjustment device (120, 650) is ended when a force threshold value is reached.

12. Two-wheeled vehicle according to one of Claims 8 to 11, **characterized in that** the control unit (600) actuates the adjustment device (120, 650) in such a manner that the height of the saddle (110) after the reduction is lower than the height of the saddle (110) before the increase.

13. Two-wheeled vehicle according to one of Claims 8 to 12, **characterized in that** the control unit (600) identifies the parking, transport and/or maintenance situation depending on the operating parameters and/or ambient parameters of the two-wheeled vehicle.

14. Two-wheeled vehicle according to one of Claims 8 to 13, **characterized in that** the control unit (600) detects the first and/or the second starting signal by means of a radio interface.

## Revendications

1. Procédé pour commander la hauteur de la selle d'un deux-roues, en particulier d'une bicyclette (100), le deux-roues présentant une selle (110) réglable en hauteur au moyen d'un dispositif de réglage (120, 650), le réglage en hauteur étant effectué en fonction de la situation d'utilisation du deux-roues, **caractérisé en ce que**
- un premier signal de départ est détecté (220) en fonction d'une situation reconnue de stationnement, de transport et/ou d'entretien, et
- en fonction du premier signal de départ, le dispositif de réglage (120, 650) est commandé de telle sorte que la hauteur de la selle (110) soit augmentée (240) par rapport au cadre du deux-roues, et
- un deuxième signal de départ est détecté (260) en fonction du premier signal de départ, et
- en fonction du deuxième signal de départ, le dispositif de réglage (120, 650) est commandé de telle sorte que la hauteur de la selle (110) soit réduite (280) par rapport au cadre du deux-roues.

2. Procédé selon la revendication 1, **caractérisé en ce que** le dispositif de réglage (120, 650) est commandé de telle sorte que par réduction de la hauteur de la selle (110), le deux-roues soit soulevé, en particulier soulevé du sol.

3. Procédé selon la revendication 1 ou 2, **caractérisé en ce que** le dispositif de réglage (120, 650) est commandé de telle sorte que la hauteur de la selle (110), après avoir été réduite, soit inférieure à la hauteur de la selle avant son augmentation.

4. Procédé selon l'une quelconque des revendications 1 à 3, **caractérisé en ce que** la position de stationnement et/ou d'entretien, après l'augmentation de la hauteur de la selle (110), est atteinte par le fait qu'au moins une partie de la selle (110) est pressée contre une résistance mécanique.

5. Procédé selon la revendication 4, **caractérisé en ce qu'**une force est détectée (235), avec laquelle la selle (110) est pressée contre la résistance mécanique, l'augmentation de la hauteur de la selle (110) étant commandée en fonction de la force détectée, et notamment il est prévu que l'augmentation se termine (255) une fois qu'une valeur seuil de force est atteinte.

6. Procédé selon l'une quelconque des revendications 1 à 5, **caractérisé en ce que** la hauteur de la selle (110) après la réduction, et la hauteur de la selle (110) avant l'augmentation, coïncident.

7. Procédé selon l'une quelconque des revendications 1 à 6, **caractérisé en ce que** la situation de stationnement, de transport et/ou d'entretien est détectée en fonction des paramètres de fonctionnement et/ou des paramètres de l'environnement du deux-roues.

8. Deux-roues, en particulier bicyclette, comprenant
- une selle réglable (110), un dispositif de réglage (120, 650) étant prévu, lequel est monté sur le tube de selle du cadre du deux-roues, et est apte à régler la hauteur de la selle, et
- un appareil de commande (600) qui commande le dispositif de réglage (120, 650), en particulier avec l'un des procédés selon la revendication 1 à 7, **caractérisé en ce que** l'appareil de commande (600) commande le dispositif de réglage (101, 650) de telle sorte que
- en fonction d'une situation de stationnement, de transport et/ou d'entretien détectée et d'un premier signal de départ détecté, la hauteur de la selle (110) soit augmentée par rapport au cadre du deux-roues, et
- en fonction d'un deuxième signal de départ détecté après le premier signal de départ, la selle (110) soit abaissée par rapport au cadre du deux-roues.

9. Deux-roues selon la revendication 8, **caractérisé en ce que** le dispositif de réglage (100, 650) est réalisé de telle sorte que lorsque la selle (110) du deux-roues est en position fixe, il puisse se soulever, en particulier du sol.

10. Deux-roues selon l'une quelconque des revendications 8 et 9, **caractérisé en ce que** la situation de stationnement et/ou d'entretien est atteinte après l'augmentation de la hauteur de la selle (110), par le fait qu'au moins une partie de la selle (110) est pressée contre une résistance mécanique.

11. Deux-roues selon la revendication 10, **caractérisé en ce que** l'appareil de commande (600) détecte une force (235) avec laquelle la selle (110) est pressée contre la résistance mécanique, le dispositif de réglage (120, 650) étant commandé en fonction de la force détectée, et notamment il est prévu que la commande du dispositif de réglage (120, 650) se termine une fois qu'une valeur de seuil de force est atteinte.

12. Deux-roues selon l'une quelconque des revendications 8 à 11, **caractérisé en ce que** l'appareil de commande (600) commande le dispositif de réglage (120, 650) de telle sorte que la hauteur de la selle (110) après la réduction soit inférieure à la hauteur de la selle (110) avant l'augmentation.

13. Deux-roues selon l'une quelconque des revendications 8 à 12, **caractérisé en ce que** l'appareil de commande (600) détecte la situation de stationnement, de transport et/ou d'entretien en fonction des paramètres de fonctionnement et/ou des paramètres de l'environnement du deux-roues.

14. Deux-roues selon l'une quelconque des revendications 8 à 13, **caractérisé en ce que** l'appareil de commande (600) détecte le premier et/ou le deuxième signal de départ au moyen d'une interface radio.
